**Europäisches Patentamt**

**European Patent Office**

**Office européen des brevets**

(19)

(11) Publication number: **0 021 451**

**A1**

(12) # EUROPEAN PATENT APPLICATION

(21) Application number: **80103769.8**

(22) Date of filing: **02.07.80**

(51) Int. Cl.³: **G 01 D 5/34**

(30) Priority: **02.07.79 US 54125**

(43) Date of publication of application:
**07.01.81 Bulletin 81/1**

(84) Designated Contracting States:
**BE DE FR GB IT NL SE**

(71) Applicant: **Western Electric Company, Incorporated**
**222 Broadway**
**New York N.Y. 10038(US)**

(72) Inventor: **Piegorsch, Wolfgang Uwe**
**30 Princeton Road**
**Hopewell, New Jersey 08525(US)**

(74) Representative: **Blumbach Weser Bergen Kramer**
**Zwirner Hoffmann Patentanwälte**
**Radeckestrasse 43**
**D-8000 München 60(DE)**

(54) **Apparatus for detecting relative motion.**

(57) A linear or rotational displacement transducer of the reflective or transmissive type uses a CCD image array (61); or a linear array of photo-sensitive diodes as the detector. In one embodiment the CCD array is angled, with respect to the axis of relative motion, such that all but two of the $m$ cells in the array span the width of a line pair element (62) in the encoding scale. In another embodiment optical means (65) are employed to image all but two of the $m$ cells in the array onto the line pair element.

./...

EP 0 021 451 A1

**Fig.14.**

TYPICAL LINE PAIR
@ .196.85 lp/cm

1.

# TITLE

see front page

Broadly speaking, this invention relates to displacement transducers. More particularly, in a preferred embodiment, this invention relates to optically-encoded displacement transducers of a type that employ linear, self-scanned, radiation or photosensitive diode arrays, or charge-coupled device image arrays, as the transducing element.

Optically encoded displacement transducers have been widely used in industry for many years. The familiar shaft encoder, which is used to determine the angular rotation or displacement of servo-motors or the like, is perhaps the best example. Linear displacement transducers are also widely employed.

Recently, there has been great interest expressed in the use of industrial robots to automate various manufacturing processes. In such robots it is essential to be able to measure the rotation and displacement that each limb of the robot arm undergoes as it manipulates the workpiece, and optical encoders appear ideally suited for that purpose.

Unfortunately, existing optical encoders simply do not have the resolution that is necessary for the more demanding assembly applications. This is primarily due to physical limitations on the number of lines that may be photographically or mechanically laid down on the encoding disc or scale. Of course, increasing the physical size of the disc or scale is one solution to this problem but, then, the encoder becomes impractically large.

U. S. patent 4,100,420, proposes another solution to this problem wherein a charge-coupled device image array is used in conjunction with a movable light blocking member, or an optical grating, to provide a displacement transducer having a digital output.

2.

Unfortunately, although the resolution of the transducer is higher than that obtained from a conventional optical encoder, this resolution is, nevertheless, inadequate for the more demanding applications.

The above and other problems have been solved by the instant invention which, in a preferred embodiment comprises a displacement transducer, which comprises a reflective or transmissive scale having a plurality of line pairs thereon, each line pair comprising an opaque or radiation nontransmissive region of width $w_1$ and an immediately adjacent transmissive region, a source of a beam of light positioned on one side of the scale, and a detector positioned on the side of the scale to receive reflected or transmitted radiation, the detector comprising a linear array of $\underline{m}$ photosensitive elements each of width $w_2$, $w_2 < w_1$, the light from the light beam being periodically interrupted by the opaque or nontransmissive regions on the scale whenever there is relative motion between the scale and the detector, the principal longitudinal axis of the array being oriented at an angle $\alpha$ to the axis of relative motion according to the relationship:

$$\alpha = \cos^{-1} \left( \frac{w_1}{(m-2) \times w_2} \right) \, .$$

BRIEF DESCRIPTION OF THE DRAWINGS

FIG. 1 is a partial, isometric view of an illustrative, prior-art linear optical encoder;

FIG. 2 is a partial, isometric view of an illustrative, prior-art optical shaft encoder;

FIG. 3 is a graph depicting the output obtained from the prior-art encoders shown in FIGS. 1 or 2, for either direction of motion.

FIG. 4 is a schematic diagram illustrating how the resolution of a prior art optical

3.

encoder can be increased by the use of two 90$^0$ out-of-phase scales;

FIG. 5 is a graph depicting the output signals obtained from an optical encoder which uses the scales shown in FIG. 4, for either direction of motion;

FIG. 6 is a block schematic diagram of an illustrative electronic circuit which may be used to derive relative position from positional changes and direction;

FIG. 7 is a state diagram illustrating how the resolution of the encoder shown in FIGS. 4, 5 and 6 can be increased;

FIG. 8 is a partial, isometric diagram illustrating how the resolution of an optical encoder may be increased by the use of more than one photodetector and a single scale;

FIG. 9 is a partial, isometric view illustrating how the resolution of an optical encoder may be increased by the use of a linear array of optical fibers to couple the scale and a corresponding plurality of discrete detectors;

FIG. 10 is a graph that shows the nature of the output signal obtained from a linear diode array in a typical optical encoder;

FIG. 11 is a block schematic diagram of an illustrative charge-coupled device image array;

FIG. 12 is a partial, schematic diagram of an enlarged portion of the charge-coupled device linear array shown in FIG. 11;

FIG. 13 is a schematic diagram illustrating how the size of the cells in a typical CCD linear array compare to the size of the opaque regions on a typical high resolution encoder scale;

FIG. 14 is a schematic diagram illustrating how a CCD linear array may be re-oriented with respect to the opaque regions on an encoding scale to maximize the resolution;

4.

FIG. 15 is a diagram illustrating the mathematical relationships that exist in the optical system employed in another illustrative optical encoder according to the invention;

FIG. 16 is a block schematic diagram of an illustrative circuit which may be used to correlate the outputs from the CCD image array for successive scans;

FIG. 17 is a block schematic diagram of an illustrative circuit which may be used to process the information obtained from a 256-element CCD linear array; and

FIG. 18 is a block schematic diagram of an illustrative circuit which provides further processing advantages over the circuit shown in FIG. 17.

DETAILED DESCRIPTION

The apparatus typically employed to perform incremental position and velocity encoding comprises three principal components: (1) a light source; (2) a light detector; and (3) a scale. The scale may be either reflective or transmissive but, in either event, comprises the primary measuring element of the encoding system. In the discussion that follows, the operation of a transmissive encoder will be described; however, the reflective case is entirely analogous.

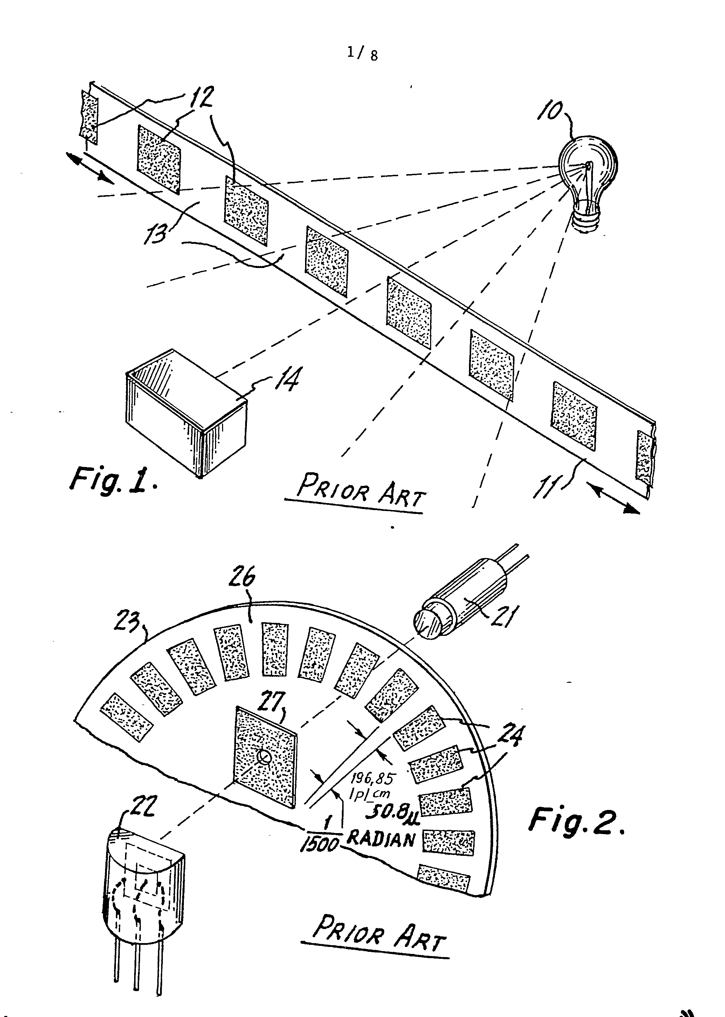

As shown in FIG. 1, a light source 10 is positioned on one side of a scale 11 having alternating opaque and transparent regions 12 and 13, respectively. The opaque regions on the scale periodically interrupt the light falling on a photosensitive detector 14 positioned on the other side of the scale. This classical prior art encoding arrangement may be applied to both linear and rotational situations and it will be apparent that either the scale or the light source/detector may be

5.

moved relative to the other.

In the above-described arrangement, the light detector senses relative motion between itself and the scale. This may be analogized to an observer in a moving vehicle counting telephone poles. If the telephone poles are equally spaced, and if this spacing is known to the observer, then the total distance traveled by the vehicle can be measured to a high degree of accuracy by merely counting the number of poles observed. If the observer also has access to a high quality chronometer, then the velocity of the vehicle may also be accurately determined by simply recording the time taken to travel the distance between a given number of poles.

Precision optical encoders, such as shown in FIG. 1, are typically constructed by photographically depositing opaque lines on a transmissive medium such as glass. Line densities of 200 line pairs per centimeter are not uncommon where the expression "line pair" means an opaque line and the immediately adjacent transmissive region. The light source used to illuminate such encoders is typically an LED, while the light detector is usually a phototransistor or a PIN diode. With this construction, the active surface region of the light detector is often larger than a single element on the scale and an optical mask is thus required to ensure that only one line or space at a time can affect the detector.

FIG. 2 depicts the basic construction of a high-precision, prior art shaft encoder which is used whenever angular rotation must be measured. As shown, the encoder comprises an LED light source 21, a phototransistor 22 and a rotatably mounted, optical encoding disc 23 comprising a plurality of evenly spaced opaque regions 24 on a transparent field 26. A mask 27 is interposed in the optical path between light source 21 and phototransistor 22.

6.

In the case of a shaft encoder, such as shown in FIG. 2, the accuracy to which angular position can be measured is directly dependent on the radius of the encoder disc. If 196.85 line pairs per centimeter is assumed to be the standard line density, then for a typical disc with a radius of 7.62 centimeters, say, the circumference c is:

$$c = 2\pi r$$
$$\approx 47.88 \text{ centimeters}$$

Therefore $\underline{n}$, the total number of line pairs, is given by:

$$n = c \times l$$
$$\approx 47.88 \text{ cm.} \times 196.85 \text{ line pairs/cm.}$$
$$\approx 9425 \text{ line pairs}$$

where

$c$ = circumference of the disc

and

$l$ = the number of line pairs/centimeter.

Angular position can, thus, be measured to an accuracy of 1 part in 9425. For a disc having twice the radius, i.e., r = 15.25 centimeters, the resolution is increased by a factor of 2. That is:

$$c = 2\pi r$$
$$95.76 \text{ centimeters}$$

and

$$n = c \times l$$
$$\approx 95.76 \text{ cm.} \times 196.85 \text{ line pairs/cm.}$$
$$\approx 18850 \text{ line pairs}$$

yielding a measurement accuracy of 1 part in 18850.

It should be noted that these calculations should really be made in reverse, because an integral number of line pair elements is required. That is, the desired resolution should be selected for a given radius of an encoder disc. Then the line pair density necessary to achieve that resolution is calculated using the above relationships.

The resolution of an optical encoder

7.

may also be specified in terms of the number of bits present in the output signal. This latter approach is more convenient for digital measuring instruments. A ten-bit accuracy implies a resolution of 1:1024 and, for a 7.62 centimeter disc, a line density of about 21.65 line pairs/centimeter. In similar fashion, a 16-bit encoder, built with a 7.62-centimeter radius disc, would require a line density of about 1368.9 line pairs/centimeter, yielding a line pair width of about $7.3\mu$. For a 16-bit, 7.62 centimeter encoder, the pin-hole in the optical mask would have a maximum diameter of about half the width of a line pair or about $3.65\,\mu$. Obviously, a 16-bit encoder would be difficult and very expensive to make.

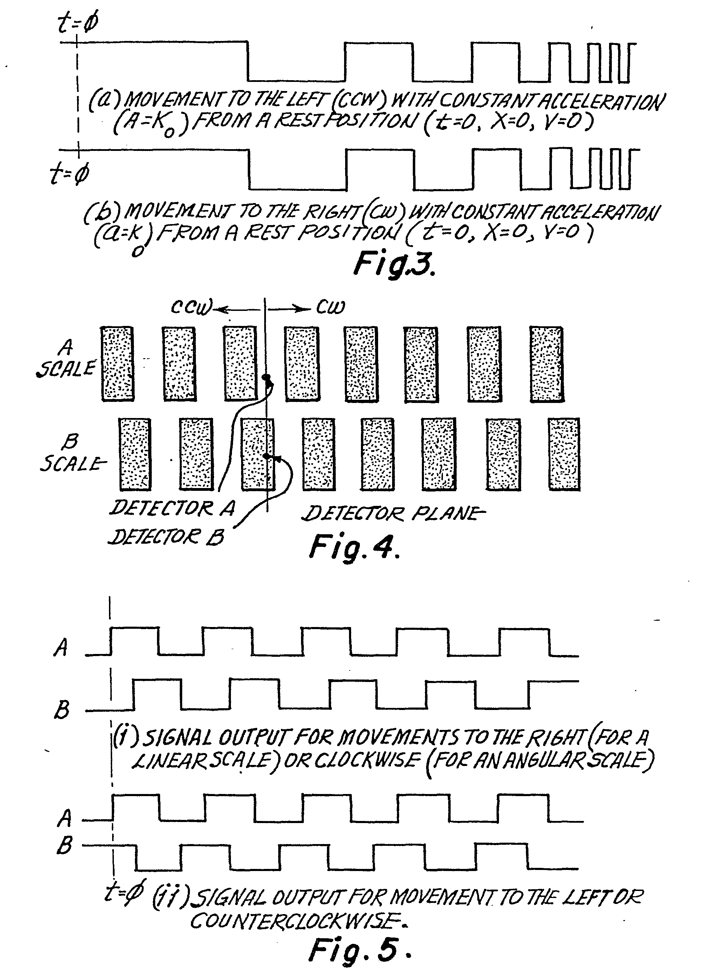

So far we have discussed single scale encoding in which a single set of markings are used to interrupt the optical path from a light source to a single detector. If we assume a rotatable shaft encoder wherein the light source and detector remain fixed while the encoder disc is free to spin, then, if at the time $t = 0$, the disc is: (1) at rest with an initial velocity $v = 0$; and (2) at some initial position $x = 0$ with the angular orientation $\alpha = 0$, as shown in FIG. 3, when the disc begins to spin there will be insufficient information to determine the direction of movement. If the direction of rotation can be ignored, the change in position can be calculated by counting the number of opaque and transmissive line transitions. Akin to our previous telephone pole analogy, if the time between transitions is measured, the velocity of rotation can be calculated from the fact that, for a fixed $x$, which is implied by accurate line spacing,

$$v = \Delta x / \Delta t.$$

Since $x$, the change in position and $\Delta t$, the time interval, are the only measurable quantities in the described system, single detector scale systems are applicable only where direction is

8.

unimportant, for example, in a tachometer.

As shown in FIG. 4, however, if two scales are deposited on the encoder disc such that one scale is 90° out-of-phase with the other, directional information can be obtained. The same results could be obtained if two detectors were used in the single-scale encoder shown in FIG. 2, however the two detectors would have to be physically arranged to obtain a precise 90° phase difference and this is not easy to do. From a manufacturing point of view, it is generally easier to manufacture the out-of-phase scales than to align the detectors accurately.

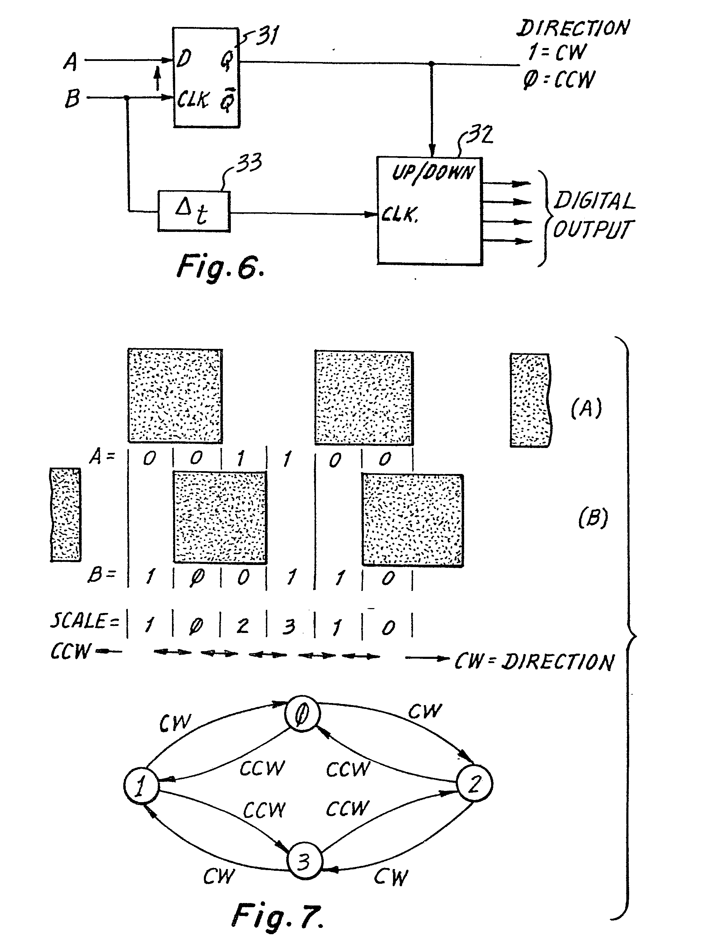

FIG. 5 shows how it is possible to derive directional information with the dual scale encoder shown in FIG. 4. If detector B is thought of as the Δx indicator and detector A is thought of as the direction indicator, then on all positive-going transitions of the B detector output signal, the A detector will indicate clockwise (right) motion if the A detector output signal is HIGH and counterclockwise (left) motion if the A detector output signal is LOW. The circuit shown in FIG. 6 provides directional output signals and accumulates positional changes from a defined initial state. As shown, this circuit comprises a D-type flip-flop 31 having the output of the A detector connected to the D input and the output of the B detector connected to the clock input. The output of the B detector is also connected, via a delay circuit 33, to the clock input of an up/down counter 32. The Q output of flip-flop 31, which is a binary "1" if the relative motion is clockwise and a binary "0" if the relative motion is counterclockwise, is connected to the up/down input of counter 32 to control whether the incoming clock pulses from delay circuit 33 are added to or substracted from the count stored in counter 32.

By adding the second scale shown in FIG. 4 to the encoder disc, directional information is obtained without the loss of any of the information obtained by the analysis of single element encoding; thus, v can be calculated, as before. If the second scale is deposited with a phase difference which is as close to 90° as is possible, then the resolution of the system can be increased by a factor of 4 by the use of more sophisticated electronics. As shown in FIG. 7, the key to this analysis lies in considering any pair of markings in A and B as defining 4 states, i.e., states 0, 1, 2 and 3. Then, any transition of A or B is considered a discrete change in position and handled accordingly. The lower half of FIG. 7 discloses the state diagram needed to include directional information in such a system.

Of course, the four-fold increase in resolution is only as good as the approximation that can be achieved to a true 90° phase difference between the two scales on the encoder. It has been found that the limit to the resolution of the position determination is primarily dependent on the line pair spacing of only one scale, while the departure from a true 90° phase difference contributes errors of a secondary nature. Fortunately, these errors only occur within any 4 adjacent states and, hopefully, are repetitive.

Unfortunately, the velocity calculation is far more dependent on the 90° phase accuracy. More specifically, the error in the change of velocity ($\Delta v$) is directly proportional to the deviation from a true 90° phase difference. This is so because v is calculated from discrete values of $\Delta x$ and $\Delta t$. The error is noticeable as a spread in the $v = \Delta x / \Delta t$ calculation and may be expressed in terms of an acceleration error, $a = \Delta v / \Delta t$.

In terms of commercially available, linear optical encoders, the present state-of-the-art

10.

seems to be a line density of 787.4 line pairs/centimeter, if all economic constraints are lifted. Above this line density, the yield in manufacturing goes down because of the inability to maintain straight lines and sharp, hard edges. The yield is also limited by pin-hole aberrations created by dust, etc.

Shaft encoder discs, on the other hand, are limited to a density of 315.0 line pairs/centimeter, due to the need to conform to non-linear geometries, i.e., each line is actually a trapezoid. This problem is compounded by the fact that the innermost of two coaxial scales must display a higher resolution than the outermost if the two scales are to be read concurrently. This coaxial property introduces extreme alignment difficulties when attempting to generate an accurate 90° phase differential.

High resolution masks present additional manufacturing difficulties. For line densities below 118.1 line pairs/cm. , the pin-holes or slits may be made on photographic film. Above 118.1 line pairs/centimeter, however, the material must be glass. At 787.4 line pairs/centimeter, the manufacturer of the detector mask runs into the same problems that are encountered in manufacturing the scales. That is, the pin-hole or slit in the mask must be only 6.35 μ wide in the transmissive region and perfectly opaque elsewhere. This degree of accuracy is difficult to achieve using standard photographic techniques.

Clearly, if a second scale provides a four-fold increase in resolution, then three scales, properly placed, would increase the resolution by a factor of 8. Taken to its logical conclusion, any one increment space (360 electrical degrees on any one scale element) may be divided into many parts by an absolute binary encoding scheme. Such a technique would require a very precise deposition of each scale with respect to the others and the ultimate resolution

0021451

11.

of the system would be loosely coupled to the line density itself. Of course, a higher degree of phase deposition accuracy implies that higher deposition accuracies exist and that, theoretically, higher line densities could be made available. However, since great difficulty is experienced in manufacturing even two scale encoders, the use of three or more scales does not seem to be the answer to our quest for ever-increasing resolution.

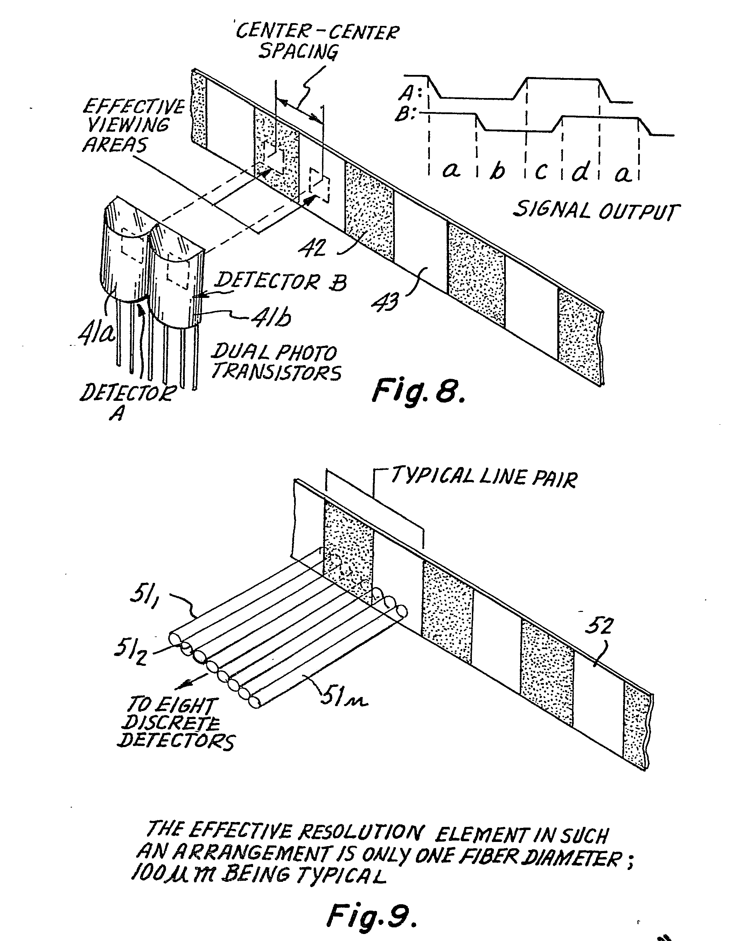

Notwithstanding the above arguments, conceptualizing the multi-element resolution improvement solution in other terms may prove fruitful. As shown in FIG. 8, if the detector included dual detector elements 41a and 41b, say, then direction could be derived from sequence information and a four-fold increase in resolution could be realized by use of only a single scale. Unfortunately, problems exist with the simplistic configuration shown in FIG. 8. The predominant limitation is that the center-to-center spacing of the two detectors must be critically matched to the effective line density. If this criterion is not met, then in one case, where the line density is too low, both detectors will view the same region on the scale. This phenomenon can be described as oversampling. On the other hand, if the line density is too high, undersampling results. This problem is made obvious if the line density is such that the line spacing is 2n, 3n, 4n...where n is the detector spacing. The actual size of the active regions of the detectors must be matched with both the center-to-center spacing of the detectors and the effective line spacing of the scale.

We have discovered that these problems can be minimized by the use of a detector array. As shown in FIG. 9, one such array comprises a plurality of optical fibers $51_1 - 51_n$, each coupled to an individual detector (not shown) and butted-up close to

12.

a single element scale 52. The effective resolution element in such an arrangement is only one fiber diameter; 100 μ being typical. There are, of course, practical problems in handling and aligning optical fibers of this size, but these problems are not insurmountable. Fortunately, it was quickly perceived that fiber-optics were not the only solution to the problem. Rather, they opened the door to consideration of solid state devices such as photo-sensitive diode arrays and charge coupled device (CCD) image arrays.

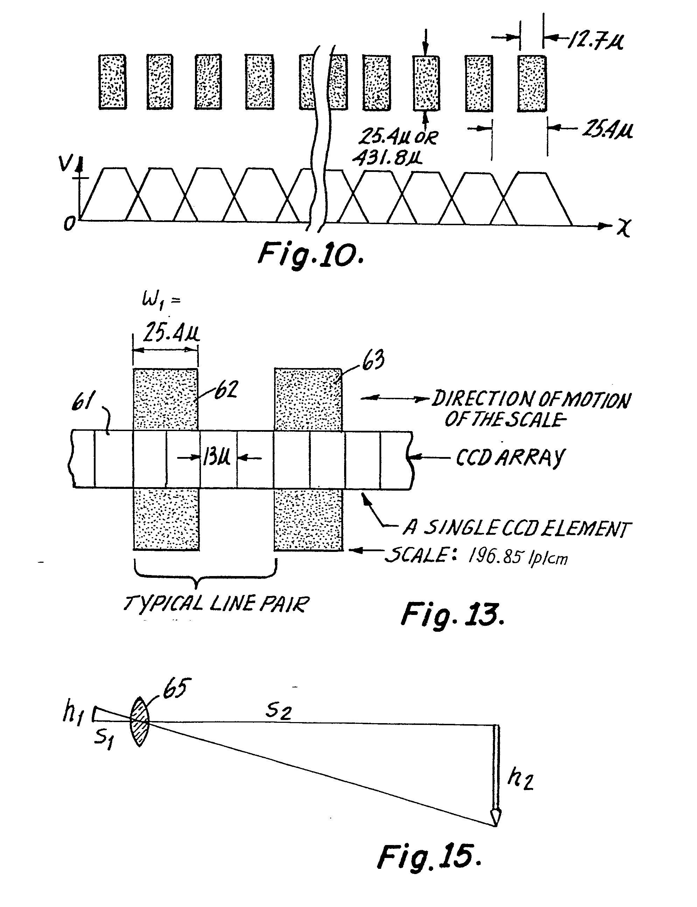

As is well known, linear, self-scanned, diode arrays are commercially available and typically comprise from 64 to 1024 and more elements per device with a nominal 25.4μ center-to-center spacing. Each diode cell comprises a photodiode and a parallel storage capacitor. Initially, the capacitor is precharged but gradually discharges by means of the reverse current (photocurrent and leakage current) induced in the diode. Next, each capacitor is individually recharged and the amount of current needed to recharge is measured. This recharge current is proportional to the incident light intensity over short periods of time, thus, scanning must go on continuously. The geometry of a typical photodiode array and its response are shown in FIG. 10.

Charge coupled device (CCD) image arrays function in a similar fashion. A typical CCD device comprises a row of sensing elements that accept photons which, in turn, generate electron-hole pairs. This induced charge is accumulated capacitively. At some point, the array of charge packets is transferred into an analog shift register and clocked, bucket-brigade fashion, to an output charge detector/preamplifier. The transfer of charge to the analog shift register clears the photo-sensitive region of any charge. Commercially available CCD arrays are available in 256, 512, 1024, 1728 and 2048 element

13.

linear configurations and typically have $13\mu$ x $17\mu$ cell geometries on $13\mu$ centers, and a claimed dynamic range of 500:1, peak to peak, implying a digital quantization of approximately $2^9$ levels.

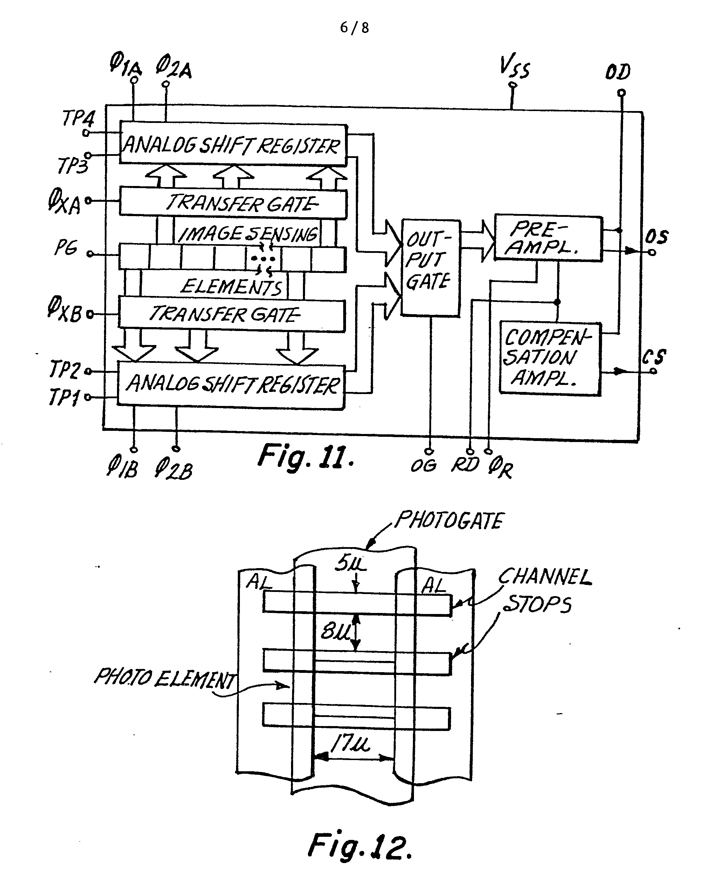

The smaller picture element (pel) and minimal dead band between pels, seem to favor CCD devices over diode arrays for optical encoding. However, in comparing the operating characteristics of each device, it may eventually prove easier, and more economical, to use diode array devices. Nevertheless, the following discussion assumes the use of a 256-element, linear CCD image sensor, for example, a Fairchild Company CCD 110/F. The block diagram of this image sensor and its geometry are shown in FIGS. 11 and 12, respectively. However, since this is an off-the-shelf, commercial device, well-described in the literature, no detailed description of the circuit diagram is needed or given here.

The use of a CCD array as the detector element removes the burden of accuracy from the scale. The solid state CCD device maintains dimensionally precise photosite spacings which are accurate to the sub-micron level. In the 256-element device employed, each pel is $13\mu$ wide and the entire array is 3328 wide. If a commercial-grade encoder scale is used having a typical line density of 196.85 line pairs/centimeter, each line element being $25.4\mu$ wide, then, assuming a 1:1 image ratio, 65.512 line pairs will cover the 256-element CCD detector, while any one line pair will cover only 1.954 detector elements.

Of course, even greater resolution will result if one line pair, or one line element, can be matched with the entire detector array. Under these conditions, the deposition accuracy and repeatability of the scale are inconsequential and all measurements are relative to the edge of any particular line element, be it transmissive or opaque. In other words,

0021451

14.

the relative motion of a line _edge_ across the CCD array defines the motion of the scale with respect to the array. Therefore, any line element is important only to the extent that its edges are defined. Thus, the task at hand becomes one of matching the scale to the detector.

Clearly, it is important to be able to recognize a single line. Therefore, any given line cannot cover the entire array. Rather, at least one detector element at each end of the array must be able to recognize the next adjacent line. The maximum single line width on the scale is then:

$$W = 3328 - (2 \times 13)\mu;$$
$$= 3302\mu;$$
$$\simeq 3300\mu.$$

The line density is thereby defined as 1.515 line pairs/centimeter; an extraordinarily low value.

Steering away from special purpose scales, alternate techniques, which allow the use of mass produced and therefore inexpensive components, will now be considered. Until now, we have assumed that the detector array is oriented so that it lies parallel to the direction of motion of the scale. However, if the detector array is oriented in such a way that it covers only one line element, then the angle of orientation becomes the vehicle by which the array and scale can be matched.

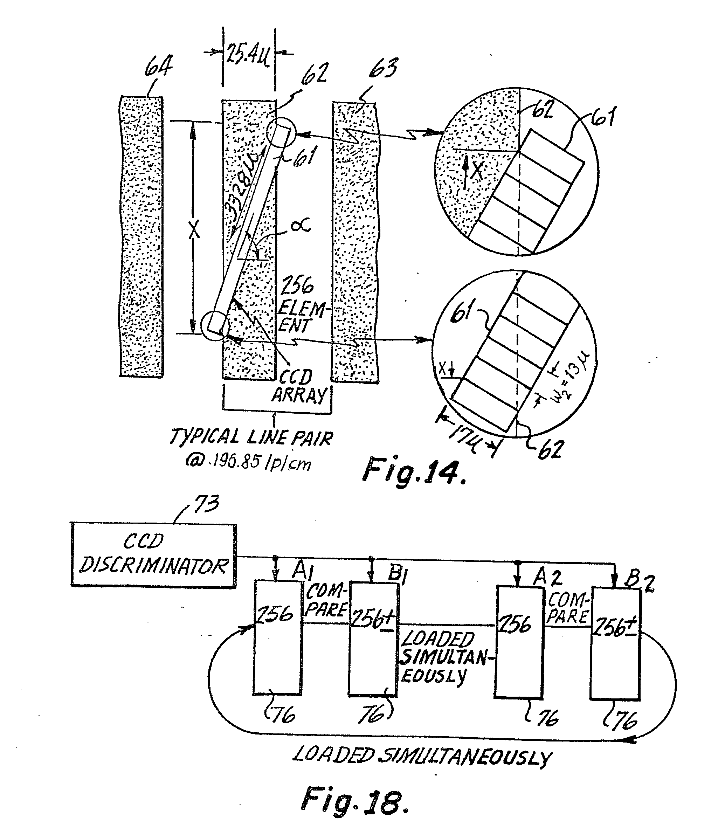

FIG. 13 depicts the conventional orientation between a CCD array 61 and two adjacent line elements 62 and 63 of an encoder scale. FIG. 14, on the other hand, depicts the orientation proposed by the instant invention. As shown, the CCD array 61 is rotated through an angle $\alpha$ with respect to the axis of motion of the scale. The balloons to the right of FIG. 14 depict the intersections of the CCD array and the left and right-hand edges of a single line element, in greater detail.

15.

In establishing the required orientation angle $\alpha$, care must be taken to ensure that at least one detector element will overhang the projected image of a typical line element. As we have seen, the effective length $W_2$ of the CCD array is $\approx 3300\mu$ and the array must be positioned so as to cover a horizontal distance of $25.4\mu$, the width $W_1$ of the line elements on the scale. Fortunately, most linear scales come with relatively long lines of at least 1.27 cm. so this is no problem. (This is not always the case for angular scales.) The simple calculations required to determine $x$ and $\alpha$ are as follows:

$$\cos \alpha = \frac{W_1}{(m-2) \times W_2}$$
$$\alpha = 25.4\mu/3300\mu,$$
$$\alpha = 89.559^{\circ}$$

and

$$\sin \alpha = x/(m-2) \times W_1$$
$$= x/3300\mu,$$
$$x = 3300 \sin \alpha \quad \mu,$$
$$x = 3299.9\ \mu$$
$$x \approx .1299 \text{ inches}$$

where

$$W_1 = 25.4\mu$$
$$W_2 = 13\mu$$

and

$$m = 256.$$

Up to this point, we have assumed a 1:1 imaging of the scale. If magnifying optics are employed, then the array will not have to be critically aligned with the scale. With the proper choice of lenses, specifically, by defining the magnification factor M, the alignment or orientation angle, $\alpha$, may be set to zero and is not critical. To accomplish this, the image of a typical line element must be magnified so as to cover the entire CCD array, again remembering to leave the two end elements uncovered. With

16.

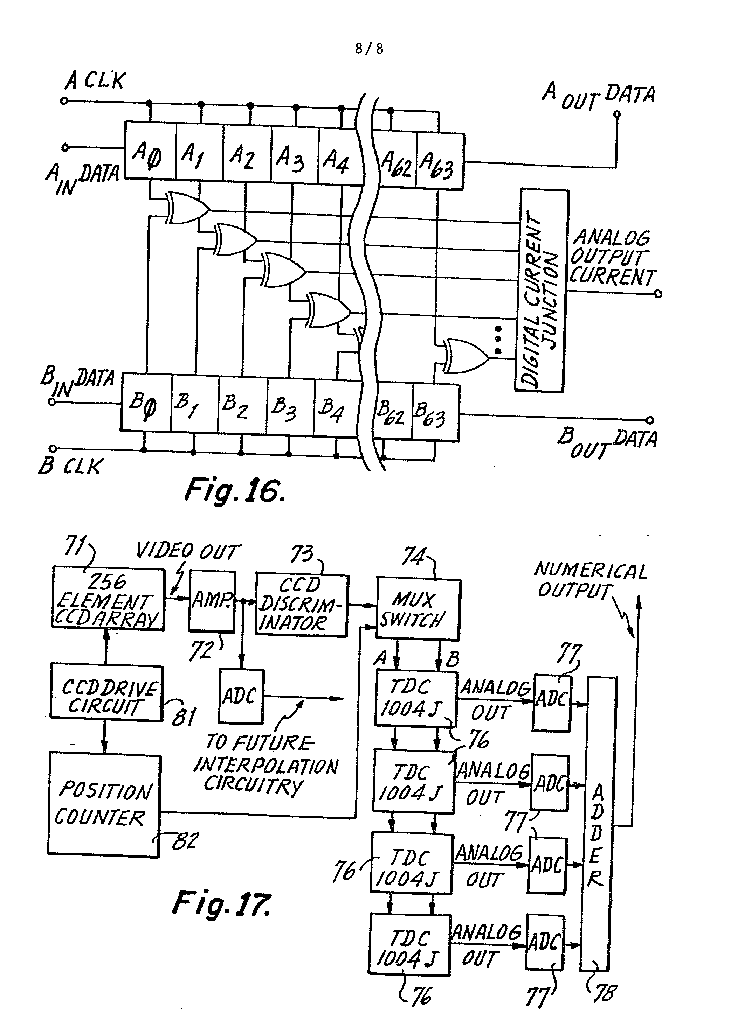

reference to FIG. 15, using available microscope objectives and working with the standard optical equations, the following results are derived:

$$M = h_2/h_1 = \frac{(m-2) \times W_2}{W_1}$$

$$= 3300\,\mu/25.4\,\mu$$

$$= 129.92$$

where

$$m = 256$$
$$W_2 = 13\,\mu$$
$$W_1 = 25.4\,\mu$$

now

$$M = S_2/S_1 \quad \text{or}$$
$$S_2 = (S_1)M$$

and

$$1/f = 1/S_1 + 1/S_2$$
$$= 1/S_1 + 1/MS_1$$

or

$$S_1 = f + \frac{f}{M}.$$

Since $S_1$ is advantageously as short as possible and $S_2$ is M times larger than $S_1$, an objective with f = 3.0mm is used. Then:

$$S_1 = 3.023\text{mm};$$
$$S_2 = 392.76\text{mm};$$

With $S_2$ at 39.276 centimeters, an unfortunately large optical system is defined. Folding optics, for example, 45° mirrors, can be utilized to minimize space. If a less precise scale had been used, 39.4 line pairs/cm. for example, the magnification required would have been less, for example, M = 25.984, resulting in proportionately smaller values of $S_2$ (80.95mm), while $S_1$ becomes slightly larger (3.12mm).

The above equations clearly establish that the line density of the scale is, more or less, irrelevant. By adjusting $S_1$ and $S_2$ to acquire the desired value of M, any scale, within practical limits,

17.

can be used.

Before the output signals generated by the CCD array can be discussed intelligently, the input light intensity must be understoood. Assuming the use of an optical system wherein M = 129.92, $S_1$ = 3.023mm, $S_2$ = 392.76mm, and f = 3.0mm, a dispersion effect, $\Delta x = 1.22 \lambda S_1/d$, will be noticed. The CCD array employed is sensitive to light in the range $.45\mu \leq \lambda \leq 1.05\mu$ and $\lambda_{ave}$ = .75 $\mu$ was used to calculate $\Delta x$ = (1.22)(.75)(3.023)/(0.85) = 3.25$\mu$, which is less than the detector spot size of 13 . For the worst case, $\lambda$ = 1.05 $\mu$, $\Delta x$ = 4.43$\mu$; which is still within acceptable limits. The dispersion effect manifests itself by transforming the image of the line edge into a gray, shadowy line, rather than a line which has a crisp black/white transition between elements on the encoder scale.

Since the analog voltage output from a single CCD element is proportional to the light which is incident on the active photocell region, the location of the edge of a line can be determined to less than a single element's width by measuring the output voltage of the element over which the line edge is transitioning. For example, if the maximum output voltage is normalized to 1 volt for a 13$\mu$-wide CCD element, then if the detected output were 0.5 volts, say, it could be assumed that the location of the line edge was approximately half-way, or 6.5$\mu$, across the element. This form of interpolation is most accurate in the center of the element and accuracy falls off towards the edges if for no other reason than the previously discussed diffraction spreading, but some non-linearities in the CCD are also assumed to exist.

As mentioned before, the CCD array has a typical dynamic range of 500:1 (peak to peak) or 2500:1 (rms). The implication is that, for a crisp black/white transition across any one element, the

18.

position of the transition can be calculated to within 1/500 of the element width, or approximately 0.026µ. From a theoretical standpoint, the analog output will be linear in the center of the CCD element and .026µ accuracy can be anticipated in that region. The use of look-up-table techniques may be used to extend this measurement accuracy into the non-linear regions.

Of course, position is not the only quantity that can be measured accurately by interpolation of the available analog output. If the readout time for the CCD array is held constant (i.e., $\Delta t$ = constant), then the measurement of the voltage difference ($\Delta v$) of a pel under a line transition between successive readouts is directly proportional to the velocity. For example, a $\Delta v$ of 0.5 volts over a time $\Delta t$ = 25µsec. implies a velocity of 270nm/µsec. whereas a $\Delta v$ of 1/500 volt implies a velocity of 1.08nm/µsec. Unfortunately, this technique would only be of use for very small velocities. The maximum detectable velocity, for this value of $\Delta t$, would be 540nm/µsec. ($\approx$1.77 ft./sec.) which requires a $\Delta v$ of 1.0 volt, the maximum normalized output voltage. When higher velocities occur, the imaged line edge would move over one pel to another during the defined $\Delta t$, and will have to be measured by other techniques, for example, a computation of $\Delta x/\Delta t$ using the interpolated voltage method to obtain $x_0$ and $x_1$, thereby defining v = $(x_0 - x_1)/(\Delta t)$.

So far, our attention has been focussed on the raw data which is available for high precision position and velocity measurements. It is important to define a system in which this data can be readily manipulated. Utilizing correlation techniques to determine the variations in image position from one output scan of the CCD array to the next is one approach. The degree to which two such subsequent scans correlate is a direct measure of the quantity or

19.

amount of motion that took place over a fixed t. The standard correlation equation is written as:

$$X_2(t) = \int h(u) \cdot X_1(t-u)\,du + Z(t)$$

and can be rewritten as:

$$C(t) = \int X_0(t)_r \cdot X_1(t - t_r)\,d\,t_r$$

where $C(t)$ is the functional measure of correlation, $X_0(t_r)$ is the reference function and $X_1(t - t_r)$ is the function whose degree of correlation is being tested. Normalizing this expression and reverting to a discrete formulation, we obtain

$$C(t) = \frac{\Sigma\left(X_0(t_r) \cdot X_1(t-t)\right)}{\Sigma\left(X_0(t_r)\right)}$$

which is a more useful equation.

Digressing to the hardware needed to implement this formula, it should be noted that at least one LSI integrated circuit has been developed to implement the quantity,

$$y(k) = \sum_{n=1}^{N} f(n)g(n-k)$$

where $f(n)$ and $g(n-k)$ are 1-bit digital values. The TDC1004J integrated circuit manufactured by TRW Company, for example, comprises two 64-bit shift registers wherein a bit-by-bit comparison is made of the two 64-bit words. An analog output is produced which is proportional to the number of single-bit identities found in making the comparison. A normalized 1 volt output can therefore be quantized into 64 discrete levels, or to 6-bit accuracy. Each of the shift registers in the device can be clocked individually (max. $f_{clock}$ = 25 MHz) and the output correlation settles to $\pm$ 5% in typically 65 nsec. This is far in excess of the clock rate of the signal source as the typical clock rate for a CCD array is 10 MHz and matches the format of the signal source (serialized data) perfectly. FIG. 16 shows the block diagram of the TRW TDC1004J integrated circuit. Again, since this in an off-the-shelf, commercial device well-described in the literature, a detailed description of this device will not be given here.

Unfortunately, the use of an integrated circuit device, such as the TDC1004J, device precludes the possibility of digitizing each CCD element into $2^9$ sub-cells. The resultant 128K element array (256 elements x $2^9$ sub-cells/element) would require 2048 correlator chips and 5.243 msec to clock in the data (assuming a 25 MHz clock), which is impractical. An alternate, more efficient method may subsequently be implemented, but for the time being the $2^9$ sub-cell implementation will not be pursued and circuitry for dealing with 256 detector elements will be discussed.

FIG. 17 shows an illustrative circuit for combining a CCD array with four correlator chips of the TDC1004J type and for deriving correlations over successive scans. As shown, the video output of a CCD array 71 is connected, via an amplifier 72, a discriminator 73 and a multiplexer 74, to one of four TRW TDC1004J integrated circuits 76, or equivalent. The analog output from each integrated circuit 76 is connected to an A/D converter 77, thence to an adding circuit 78. CCD array 71 is scanned by a drive circuit 81 which also advances the count on a position counter 82 which, in turn, is connected to and controls multiplex circuit 74.

In operation, the CCD array 71 is clocked, after a suitable delay for reset, and the video signal which is output therefrom is digitized into a 1-bit ($\phi$ or 1) value by discriminator 73. The multiplexer 74 routes the 256 1-bit words into the A-Registers of the four correlators. The next scan is routed into the B Registers and compared to the reference. If no relative motion has taken place then the maximum correlation value will occur after all 256 pel values have been clocked into the correlators. If the image has moved forward by one pel (e.g., to the right or clockwise), then the maximum correlation value will occur after 255 pels have been clocked into the correlation registers. In similar fashion, if the image has moved backward by one pel (e.g., to the left or counterclockwise), the maximum correlation will occur after 257 pels have been clocked into the register. However, this generates a subtle problem. The first scan is fed into Register A and is the reference scan. The second scan is fed into Register B and compared to the first scan and, after the entire 256-element array is clocked into the correlator, this second scan becomes the reference for the third scan which is fed into Register A where the previous reference scan was held. This precludes transferring the scan to be tested by more than 256 positions. Two correlator strings are, thus, required. Register A of either string is always loaded with the reference scan while Register B of either correlator string is always loaded with the test scan. The loading sequence is defined, with reference to FIG. 18, as:

1) load scan as reference     (256 clocks)
   into Register A of
   correlator string 1;

2) load next scan as test     (256 ± clocks)
   into Register B of
   correlator string 1
   and load same scan as
   reference into
   Register A of
   correlator string 2;     (256 clocks)

3) load next scan as test     (256 ± clocks)
   into Register B of
   correlator string 2 and

22 .

load scan as reference
into Register A of string 1.
(same as step 1)

An alternative embodiment of the invention substitutes an analog correlator, for example, a Reticon Company RS403, for the dual 64/1-bit shift registers of the digital correlators 76. The analog correlators 76 comprises a dual 32-sample bucket-brigade type analog delay line. The processing scheme is similar to the digital case with the only exceptions revolving around the inherent dynamic nature of analog delay lines. In this second embodiment, a reference scan cannot be stored statically, as in the digital shift register, but the presence of a shift-backwards clock input allows the analog signal to be stored dynamically by moving it back and forth from one cell to another. Transfer losses and clocking noise might accumulate to make this solution impractical under some circumstances. Nonetheless, this analog correlation would allow interpolation measurements without the need for extensive hardware and, therefore, represents an attractive solution.

In review, it has been stated that the present state of the art in incremental, optical encoder design allows for a resolution of 12.7µ derived from encoder scales with a line density of 787.4 line pairs/centimeter. From a practical point of view, 196.85 line pairs/centimeter scales are more economically feasible, the resolution element then being 50.8µ wide. By adding some decoding electronics and depositing a second scale which is 90° out-of-phase with the first, resolution can be increased to 3.175µ in the 787.4 line pairs/centimeter case and 12.7µ for the 196.85 line pairs/centimeter example.

The use of electronic imaging apparatus improves resolution; moderately in the simple case, drastically if interpolation techniques are used. Using

23.

a CCD linear array, $13_\mu$ resolution elements can be defined readily.  Assigning a 1:1 image ratio (no magnification), crude scales of 1.52 line pairs/centimeter can be employed to obtain this resolution.  By analyzing the analog output of the CCD, and interpolating non-full-scale outputs, a theoretical position of 1/500 of a CCD element can be obtained.  This would translate to positional measurements which are accurate to within $0.026_\mu$ which, if embodied in a 7.62-centimeter diameter shaft encoder, implies a measurement accuracy of approximately 1 part in 18.415 x $10^6$ or roughly 1 part in $2^{24}$.

In the drawings, entirely conventional elements such as power supplies, clock circuits, etc., have not been shown to avoid clutter.

One skilled in the art may make various changes and substitutions without departing from the spirit and scope of the invention.

Claims

1. Displacement transducer comprising a scale having regions of first optical characteristic and regions of second optical characteristic formed thereon, a source of a beam of radiation directable at the scale, and a detector comprising a plurality of detecting elements positioned to receive radiation from the scale,
CHARACTERIZED IN THAT
the scale regions of first optical characteristic comprise line pair elements (62, 63) having a width $w_1$, and means are functionally associated with the detector for optimizing the correspondence between the number of detecting elements (61) in the detector and the width of a line pair element (62).

2. Transducer according to claim 1,
CHARACTERIZED IN THAT
the line pair elements are part of a plurality of line pairs formed on the scale, each line pair comprising a line element (62, 63) having the first optical characteristic, and an immediately adjacent region having the second optical characteristic, and
the detector comprises a linear array of $m$ photosensitive elements (41a, b; 61) each of width $w_2$, $w_2 < w_1$, the beam of radiation being periodically modulated by the regions having the first optical characteristic on the scale whenever there is relative motion between the scale and the detector, the principal longitudinal axis of the array being oriented at an angle $\alpha$ to the axis of relative motion according to the relationship:

$$\alpha = \cos^{-1} \left( \frac{w_1}{(m-2) \times w_2} \right).$$

3. Displacement transducer according to claim 1 or 2,

CHARACTERIZED BY

the detector comprising a linear array of $\underline{m}$ photosensitive elements each of width $w_2$, $w_2 <$ $w_1$,

means, intermediate the scale and the detector, for imaging successive regions of the first optical characteristic onto the detector, the imaging means having a magnification M such that:

$$M = \frac{(m-2) \times w_2}{W_1}$$

where m is the number of phosensitive elements.

4. Displacement transducer according to claim 2 or 3,

CHARACTERIZED BY

the detector comprising $\underline{m}$ optical fibers, one end of each fiber being coupled to a corresponding one of the photosensitive elements, the other ends of the fibers being organized, seriatim, into a linear fiber array positioned proximate the scale, the principal longitudinal axis of the fiber array being parallel to the axis of relative motion.

5. Transducer according to any one of claims 1-4,

CHARACTERIZED IN THAT

the scale is positioned intermediate the beam source and the detector such that the radiation comprising the beam passes through the scale, the first optical characteristic comprises opacity and the second optical characteristic comprises transmissivity.

6. Transducer according to any one of claims 1-4,

CHARACTERIZED IN THAT

the detector and the radiation beam source are positioned on the same side of the scale such that the radiation comprising the beam is reflected off

- 26 -

the scale and into the detector, the first and second optical characteristics comprising substantially differing reflectivities.

7. Transducer according to any one of the preceding claims,
CHARACTERIZED IN THAT
the scale comprises a linear array of line pairs (42, 43), and the detector comprises a linear array of photosensitive diodes (41a, b).

8. Transducer according to any one of claims 1-6,
CHARACTERIZED IN THAT
the scale comprises a linear array (62, 63, 64) of line pairs, and the detector comprises a charge-coupled device image array (61).

9. Transducer according to any one of claims 1-8,
CHARACTERIZED IN THAT
a plurality of the regions having a first optical characteristic (74) is circumferentially disposed about a disc (23) having the second optical characteristic (26).

10. Transducer according to claim 4,
CHARACTERIZED IN THAT
the diameter $\underline{d}$ of each optical fiber $(51_{1-n})$ is selected such that:
$$\underline{m} \times d \leq w.$$
2

11. Transducer according to claim 8,
CHARACTERIZED BY
means, connected to the charge-coupled device image array, for correlating the output signals therefrom over successive scans thereby to determine the presence or absence of relative motion.

12. Transducer according to claim 11,
CHARACTERIZED IN THAT

- 27 -

the correlating means comprises

at least one correlating circuit (76)
comprising first and second p-stage shift registers, $\underline{p}$
logic circuits connected to respective corresponding
stages of the first and second registers, and a digital
current junction connected to the outputs of the $\underline{p}$ logic
circuits,

at least one analog to digital converter
(77) connected to the analog output of the correlating
circuit (76), upstream of the correlating circuit, and

a multiplexer (74) for alternately
routing the charge-coupled device image array output
signals corresponding to successive scans to the first
and second shift registers.

13. Transducer according to claim 12,
CHARACTERIZED BY

a plurality of correlating circuits (76)
functionally arranged into first and second strings, and
the multiplexer (74) being arranged for alternately
routing the output of the charge-coupled device image
array (71) simultaneously into the first register of the
second string and the second register of the first
string, and the second register of the second string and
the first register of the first string.

Fig.1.

PRIOR ART

196,85
lp/cm
50.8μ
1/1500 RADIAN

Fig.2.

PRIOR ART

$t=\phi$

(a) MOVEMENT TO THE LEFT (CCW) WITH CONSTANT ACCELERATION ($A=K_o$) FROM A REST POSITION ($t=0$, $X=0$, $V=0$)

$t=\phi$

(b) MOVEMENT TO THE RIGHT (CW) WITH CONSTANT ACCELERATION ($a=K_o$) FROM A REST POSITION ($t=0$, $X=0$, $V=0$)

**Fig.3.**

CCW $\longleftarrow$ $\longrightarrow$ CW

A SCALE

B SCALE

DETECTOR A

DETECTOR B

DETECTOR PLANE

**Fig.4.**

A

B

(i) SIGNAL OUTPUT FOR MOVEMENTS TO THE RIGHT (FOR A LINEAR SCALE) OR CLOCKWISE (FOR AN ANGULAR SCALE)

A

B

$t=\phi$ (ii) SIGNAL OUTPUT FOR MOVEMENT TO THE LEFT OR COUNTERCLOCKWISE.

**Fig.5.**

0021451

3/8

Fig.6.

Fig.7.

CENTER-CENTER
SPACING

EFFECTIVE
VIEWING
AREAS

A:
B:

a   b   c   d   a

SIGNAL OUTPUT

42

43

DETECTOR B

41b

41a

DUAL PHOTO
TRANSISTORS

DETECTOR
A

**Fig. 8.**

TYPICAL LINE PAIR

$51_1$

$51_2$

$51_m$

52

TO EIGHT
DISCRETE
DETECTORS

THE EFFECTIVE RESOLUTION ELEMENT IN SUCH
AN ARRANGEMENT IS ONLY ONE FIBER DIAMETER;
$100 \mu m$ BEING TYPICAL

**Fig. 9.**

**Fig.10.**

$W_1 = 25.4\mu$

61

62

63

DIRECTION OF MOTION OF THE SCALE

CCD ARRAY

$13\mu$

A SINGLE CCD ELEMENT

SCALE: 196.85 lp/cm

TYPICAL LINE PAIR

**Fig. 13.**

$h_1$

$S_1$

65

$S_2$

$h_2$

**Fig.15.**

$\phi_{1A}$  $\phi_{2A}$

$V_{SS}$  OD

TP4

TP3

ANALOG SHIFT REGISTER

$\phi_{XA}$

TRANSFER GATE

PG

IMAGE SENSING

ELEMENTS

OUT-PUT GATE

PRE-AMPL.

OS

$\phi_{XB}$

TRANSFER GATE

COMPEN-SATION AMPL.

CS

TP2

TP1

ANALOG SHIFT REGISTER

$\phi_{1B}$  $\phi_{2B}$

## Fig. 11.

OG  RD  $\phi_R$

PHOTOGATE

$5\mu$

AL

AL

CHANNEL STOPS

$8\mu$

PHOTO ELEMENT

$17\mu$

## Fig. 12.

0021451

TYPICAL LINE PAIR
@ .196.85 lp/cm

**Fig.14.**

LOADED SIMULTANEOUSLY

**Fig.18.**

A CLK

A OUT DATA

A IN DATA

| A∅ | A₁ | A₂ | A₃ | A₄ | | A₆₂ | A₆₃ |

DIGITAL CURRENT JUNCTION

ANALOG OUTPUT CURRENT

B IN DATA

| B∅ | B₁ | B₂ | B₃ | B₄ | | B₆₂ | B₆₃ |

B OUT DATA

B CLK

Fig. 16.

71 256 ELEMENT CCD ARRAY

VIDEO OUT

72 AMP.

73 CCD DISCRIM-INATOR

74 MUX SWITCH

NUMERICAL OUTPUT

CCD DRIVE CIRCUIT 81

ADC

TO FUTURE INTERPOLATION CIRCUITRY

A        B

TDC 1004 J

ANALOG OUT

77 ADC

76

POSITION COUNTER 82

TDC 1004 J

ANALOG OUT

ADC

77

76 TDC 1004 J

ANALOG OUT

ADC

A D D E R

TDC 1004 J

ANALOG OUT

ADC

Fig. 17.

76        77        78

| Category | Citation of document with indication, where appropriate, of relevant passages | Relevant to claim |
|---|---|---|
| DX | US - A - 4 100 420 (METCALF et al.) <br> * Figure 1; column 1, line 55 to column 2, line 40 * | 1,5,8, 9 |
| | US - A - 3 742 233 (GORGERS et al.) <br> * Abstract; figures 1,3,4; column 4, lines 33 to 60 * | 1,2,5 |
| | GB - A - 1 536 022 (INTEGRATED PHOTOMATRIX) <br> * Page 1, lines 15-84; figures * | 1,2,7 |
| A | US - A - 4 112 295 (DUBIK et al.) <br> * Abstract; figures 2,4 * | 3 |
| A | US - A - 3 833 816 (EMURA et al.) <br> * Abstract ; figure 4 * | 4 |
| A | FR - A - 2 339 838 (RCA) <br> * Page 4, line 20 to page 6, line 4 * | 1,8,11 |
| A | US - A - 3 942 022 (STUMPF et al.) <br> * Abstract; figure 2 * | 11-13 |

## DOCUMENTS CONSIDERED TO BE RELEVANT

**CLASSIFICATION OF THE APPLICATION (Int. Cl. 3)**

G 01 D 5/34

**TECHNICAL FIELDS SEARCHED (Int.Cl. 3)**

G 01 D 5/28
5/30
5/32
5/34
G 01 B 11/02
G 01 P 3/68

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 22-04-1980 | LLOYD |

EPO Form 1503.1 06.78